# EUROPÄISCHE PATENTSCHRIFT

(11) **EP 0 991 995 B1**
(45) Veröffentlichungstag und Bekanntmachung des Hinweises auf die Patenterteilung: **09.05.2001**
(21) Anmeldenummer: 98936362.7
(22) Anmeldetag: 18.06.1998
(51) Int. Cl.: G06F 9/46

(54) **UNTERBRECHUNGSVERFAHREN IN EINEM COMPUTERSYSTEM MIT UNTERBRECHUNGSSTEUERUNG**
INTERRUPT METHOD IN A COMPUTER SYSTEM WITH INTERRUPT CONTROL
PROCEDURE D'INTERRUPTION DANS UN SYSTEME INFORMATION A COMMANDE DES INTERRUPTIONS

(30) Priorität: 27.06.1997 DE 19727480
(43) Veröffentlichungstag der Anmeldung: 12.04.2000
(73) Patentinhaber: Continental ISAD Electronic Systems GmbH & Co. oHG, 86899 Landsberg/Lech (DE)
(72) Erfinder: GRÜNDL, Andreas, D-81377 München (DE); HOFFMANN, Bernhard, D-82319 Starnberg (DE); BALS, Werner, D-82340 Feldafing (DE)
(74) Vertreter: Schmidt, Steffen J., Dipl.-Ing.
(86) Internationale Anmeldenummer: EP9803687
(87) Internationale Veröffentlichungsnummer: WO9900726

(56) Entgegenhaltungen:
- EP-A- 0 764 901
- US-A- 5 437 039
- US-A- 5 542 076
- ROHNER A: "ECHTZEIT IN C PROGRAMMIEREN" ELEKTRONIK, Bd. 39, Nr. 24, 23. November 1990, Seiten 74-77, XP000172272

## Beschreibung

Die vorliegende Erfindung betrifft ein Unterbrechungsverfahren in einem Computersystem mit Unterbrechungssteuerung. Insbesondere betrifft die Erfindung ein Unterbrechungsverfahren in einem Computersystem mit Unterbrechungssteuerung, das für Standard-Aufgaben (Datenein-/ausgabe, Peripherieverwaltung, Daten- und Programmspeicherung, Kommunikation mit anderen Rechnern, etc.) mit einem Betriebssystem ausgestattet ist. Für Anwendungen mit hohen Anforderungen an die Rechengenauigkeit (Fließkomma-Arithmetik) und an die Rechengeschwindigkeit werden zunehmend RISC-Prozessoren eingesetzt, für die es sehr effiziente und komfortable Programmentwicklungs- und Betriebsumgebungen (Compiler, Debugger, Betriebssysteme) gibt. Ein derartiger Prozessor ist zum Beispiel die Embedded-Version MPC 505 des Motorola POWER PC Prozessors.

Ein eklatanter Nachteil solcher Prozessoren ist allerdings die Tatsache, daß sie zwar mehrere Eingänge für extern auslösbare Unterbrechungen haben. Alle diese extern auslösbaren Unterbrechungen werden jedoch logisch verknüpft oder maskiert und führen zur Auslösung eines einzigen Unterbrechungssignals, das dem Prozessorkern zugeführt wird. Dies bedeutet jedoch, daß während der Behandlung einer durch ein externes Ereignis ausgelösten Unterbrechung eine zweite Unterbrechungs(-anfrage) durch den Prozessorkern nicht bedient werden kann.

Weiterhin sind derzeit verfügbare Betriebssysteme auch bei sehr schnellen Prozessoren aufgrund ihrer Komplexität nicht in der Lage, auf Unterbrechung(s-Anfrag)en mit kurzen Abständen oder hoher Periodizität in sehr kurzen Erwiderungszeiten zu reagieren.

Üblicherweise führt bei einem Computersystem mit Unterbrechungssteuerung und einem Betriebssystem eine Unterbrechungsanfrage dazu, daß ein Adresszähler des Prozessors auf eine betriebssystem-eigene Unterbrechungs-Behandlungsroutine gestellt wird, die der Prozessor anschließend ausführt. Die Unterbrechungs-Behandlungsroutine ist relativ aufwendig, da sie aus einem Prolog zum Sichern des Zustandes zumindest eines Teils des Computersystems, einen Hauptteil, und einen Epilog zum Wiederherstellen des im Prolog gesicherten Zustandes des Computersystems besteht. Im Hauptteil wird ein Ereignis für in dem Computersystem vorhandene Tasks ausgelöst (zum Beispiel wird ein Zeitsignal abgesetzt, in dessen Abhängigkeit Tasks inaktiv, vorbereitet, oder aktiv werden). Im Epilog werden darüberhinaus eine Reihe von sehr speziellen Aufgaben (zum Beispiel betriebssystemnahe Routinen für anschließende Task-Aktivierung etc.) ausgeführt. Dies hat zur Folge, daß für diesen Teil der Unterbrechungs-Behandlungsroutine ein erheblicher Zeitbedarf besteht.

In bestehenden RISC-Computersystemen benötigt eine derartige Unterbrechungs-Behandlungsroutine wenigstens etwa 80 - 90 *µ*sec. Wenn aufgrund der Vorgaben des durch das Computersystem zu steuernden Prozesses zum Beispiel alle 100 *µ*sec eine bestimmte Routine ausgeführt werden soll, wäre der Prozessor durch das alle 100 µsec auftretende Unterbrechungssignal und die dadurch ausgelöste die Unterbrechungs-Behandlungsroutine bis auf 10 - 20% seiner Rechenzeit ausgelastet.

Wenn bei der Lösung von Steuerungsaufgaben auf den Komfort bestehender Betriebssysteme nicht verzichtet werden kann oder soll, können derzeit also nur solche Steuerungsaufgaben in der Umgebung bestehender Betriebssysteme bewältigt werden, bei denen die Unterbrechung(s-Anfrag)en einen bestimmten zeitlichen Mindest-Abstand nicht unterschreiten. Üblicherweise beträgt bei derartigen, im Stand der Technik bekannten Rechnersystemen der Rechenzeitbedarf der Unterbrechung(s-Anfrag)en etwa 5% der verfügbaren Rechenzeit bis zur nächsten Unterbrechung(s-Anfrag)e.

Damit sind insbesondere Anwendungen, bei denen sehr kurze Reaktionszeiten auf Unterbrechungs(-anfragen) und eine strenge Periodizität gefordert sind, nicht in bestehenden Betriebssystem-Umgebungen realisierbar.

Aus Osborne, Adam: Einführung in die Mikrocomputer-Technik, 4. Aufl., München: te-wi Verlang, 1982, S.5-76 bis 5-82 ist bekannt, daß bei einem Computersystem mit Unterbrechungssteuerung eine Unterbrechungsanfrage dazu führt, daß ein Adresszähler des Prozessors auf eine Unterbrechungsbehandlungsroutine gestellt wird, die der Prozessor anschließend ausführt. Dabei enthält die Unterbrechungsbehandlungsroutine einen ersten Teil, in dem die Registerinhalte der Zentraleinheit in einen Speicherbereich geschrieben werden, einen Unterbrechungsprogammhauptteil, und einen Endteil, in dem am Ende der Unterbrechungsperiode die Register der Zentraleinheit mit den Inhalten des alten Programms wieder geladen werden.

In Frees, Wolfgang: Teilzeitarbeit im Prozessor. Kooperatives Multitasking für Echtzeit-Systeme. In: Elektronik 9/1996, 1996, S. 100 bis 106 ist eine Lösung für ein kooperatives Echtzeit-Multitaskingsystem beschrieben. Eine Besonderheit von kooperativen Multitaskingsystemen besteht darin, daß jede Task die Kontrolle über den Prozessor oder andere Betriebsmittel solange behält, bis sie diese Kontrolle selbst wieder abgibt. Dies ist darin begründet, daß das Umschalten zwischen den verschiedenen Tasks durch einen Scheduler erfolgt, der nur dann aktiv wird, wenn die Programme Systemaufrufe durchführen. Die Zeit zwischen zwei Systemaufrufen kann jedoch beliebig lang werden und dementsprechend schlecht wird die Qualität des resultierenden Multitaskings.

Ein zweiter in diesem Dokument angesprochener Lösungsansatz bedient sich eines preemtiven (unterbrechenden) Schedulers, bei dem der Zeitpunkt der Task-Umschaltung nicht den Anwendungen allein überlassen bleibt. Vielmehr greift der Scheduler selbst, z.B. über einen timergesteuerten Interrupt in das Geschehen ein und bewirkt einen Taskwechsel.

Das in diesem Dokument im Detail beschriebene kooperative Multitasking ist jedoch in erster Linie deshalb effektiver als die in diesem Artikel als bekannt vorausgesetzten Lösungen, weil der Bedarf für den wechselseitigen Ausschluß der verschiedenen Tasks z.B. beim Zugriff auf globale Daten von vornherein ausgeschlossen wird. Dies reduziert den Programmund damit Zeitbedarf beim Taskwechsel erheblich. Allerdings ist dies nur deshalb zu erreichen, weil jede Task den Zeitpunkt eines Taskwechsels selbst festlegt.

Aufgaben, die eine besonders hohe Anforderung an die Periodizität haben, bzw. bei denen die zeitliche Unschärfe des Beginns ihrer Abarbeitung minimiert sein soll, können damit jedoch keinesfalls gelöst werden, da völlig ungewiß ist, zu welchem Zeitpunkt eine aktive Task beendet ist und die Kontrolle über den Prozessorkern auf eine derzeit wartende Task übergibt. Der beschriebene Scheduler ist auch nicht in der Lage, ein starres Zeitraster für die zeitkritischen Aufgaben zur Verfügung zu stellen.

Dieses Dokument geht auch gar nicht auf die Probleme ein, die das Einleiten einer Vielzahl von Interrups über einen Interruptanforderungskanal eines Prozessors hinsichtlich der zeitlichen Unschärfe der Abarbeitung der einzelnen Interruptserviceroutinen aufwerfen. Auch bei der in diesem Dokument beschriebenen Lösung ist es nicht vermeidbar, daß das Eintreffen vieler Interrups hohe Erwiderungsseiten mit ungewissem zeitlichem Anfang der einzelnen Unterbrechungsprogramme hervorruft.

Der Erfindung liegt damit die Aufgabe zugrunde, eine Möglichkeit bereitzustellen, um Unterbrechung(s-Anfrag)en mit kurzen Abständen oder hoher Periodizität in sehr kurzen Erwiderungszeiten in bestehenden Betriebssystem-Umgebungen zu verarbeiten.

Die erfindungsgemäße Lösung gemäß dem Anspruch 1 ist zwar insbesondere bei Computersystemen mit den oben beschriebenen Prozessortypen (RISC) einsetzbar. Die erfindungsgemäße Lösung ist aber auch bei Computersystemen mit anderen Prozessortypen (CISC) einsetzbar, die die oben beschriebenen Einschränkungen hinsichtlich der Behandlung von Unterbrechung(sanfrag)en aufweisen.

Mit der erfindungsgemäßen Lösung wird nicht bei jeder Unterbrechungs-Anfrage die (sehr zeitintensive) betriebssystem-eigene Unterbrechungs-Behandlungsroutine abgearbeitet. Vielmehr wird stets der andere Programmteil ausgeführt, in dem Aufgaben behandelt werden können, die besonders hohe Anforderungen an die Periodizität haben, die besonders hohe Priorität haben, oder dergl. Dies sind zum Beispiel vordringliche Regelaufgaben in Prozess-Steuerungen.

Der andere Programmteil weist eine Sicherungsroutine für den Zustand zumindest eines Teils des Computersystems, einen Kernteil, in dem periodizitäts- und/ oder zeitkritische Aufgaben bearbeitet werden, und eine Restaurierungsroutine zum Wiederherstellen des in der Sicherungsroutine gesicherten Zustandes des Computersystems auf.

In der Sicherungsroutine werden dabei in erster Linie die Register des Prozessors (und ggf. von Peripheriebausteinen) in einen speziellen Speicherbereich (zum Beispiel in den Stack) geschrieben.

In dem Kernteil können hardware-nahe oder prozess-kritische Aufgaben erledigt werden, deren Auslagerung in Tasks aufgrund ihrer hohen Periodizität(sanforderung) nicht in Frage kommt.

Die Restaurierungsroutine stellt praktisch die Umkehrung der Sicherungsroutine dar.

Das heißt, daß durch die erfindungsgemäße Lösung die Wiederholrate (Periodizität) von bestimmten Aufgaben zeitlich sehr genau eingehalten werden kann, weil die zeitintensive betriebssystem-eigene Unterbrechungs-Behandlungsroutine nicht immer, sondern nur in einem bestimmten zeitlichen Abstand abgearbeitet wird. Damit ist für die anderen Aufgaben die zeitliche Unschärfe des Beginns ihrer Abarbeitung (Jitter) minimiert.

Damit wird auch erreicht, daß Aufgaben mit hoher Wiederholrate zeitgenau ausgeführt werden. Dennoch wird auch die betriebssystem-eigene Unterbrechungs-Behandlungsroutine mit geringem Jitter ausgeführt.

Bei einer bevorzugten Ausführungsform der Erfindung wird die Unterbrechungsanfrage durch einen dem Computersystem zugeordneten Zeitgeber ausgelöst, der Unterbrechungsanfragen in Intervallen von vorzugsweise weniger als 500 *µ*sec, insbesondere von 100 *µ*sec oder weniger erzeugt. Da die sehr zeitintensive betriebssystem-eigene Unterbrechungs-Behandlungsroutine nicht bei jeder Unterbrechungsanfrage abgearbeitet wird, bleibt mehr Rechenzeit für allgemeine Aufgaben und trotzdem kann das minimale Zeitraster zwischen zwei Unterbrechungsanfragen gegenüber dem Stand der Technik nennenswert verkürzt werden.

Erfindungsgemäß ist der Hauptteil der Unterbrechungs-Behandlungsroutine so gestaltet, daß er Vorbereitungsschritte für in dem Computersystem vorhandene Tasks ausführt. Diese Vorbereitungsschritte führen dazu, daß wenigstens eine der Tasks ihren Status ändern kann (aber nicht notwendigerweise ändern muß), wenn die Unterbrechungs-Behandlungsroutine beendet ist. Beispielsweise bestehen diese Vorbereitungsschritte aus Inkrementierungen von Weck-Aufrufzählern.

In einer besonders bevorzugten Ausführungsform des erfindungsgemäßen Verfahrens weist der andere Programmteil nach der Sicherungsroutine eine Vorbereitungsroutine auf, durch die die Ausführung von Hochsprachen-Programmteilen in dem Kernteil des anderen Programmteils eingeleitet wird. Insbesondere bereitet die Vorbereitungsroutine die Verwendung von lokalen und/oder globalen Variablen (auch in integer oder Fließkommaformat), externen Daten(feldern), Konstanten etc. in dem Kernteil des anderen Programmteils vor. Dies erlaubt die Realisierung von komplexen (auch hardware-nahen) Programmieraufgaben in einer Hochsprache (zum Beispiel in C), so daß nicht in Assembler programmiert werden muß.

Vorzugsweise enthält der Kernteil wenigstens eine übergeordnete Routine mit hoher Periodizität(sanforderung) und mehrere untergeordnete Routinen mit niedrigerer Periodizität(sanforderung). Damit können (Teil-)Aufgaben unterschiedlich gewichtet bearbeitet werden. Insbesondere (Teil-)Aufgaben, bei denen es auf eine präzise Einhaltung der Wiederholrate ihrer Ausführung ankommt, können so sicher und zuverlässig abgearbeitet werden, da nicht stets der (unterschiedlich lange) Epilog der betriebssystem-eigenen Unterbrechungs-Behandlungs-routine ausgeführt wird.

Dies gilt insbesondere, wenn die übergeordnete Routine mit hoher Periodizität(sanforderung) bei jedem Aufruf des anderen Programmteils abgearbeitet wird, während jede der untergeordneten Routinen mit niedrigerer Periodizität(sanforderung) in Abhängigkeit von einem Entscheidungsprozess, vorzugsweise anschließend an die übergeordnete Routine abgearbeitet wird. Dabei besteht die Möglichkeit, daß die betriebssystem-eigene Unterbrechungs-Behandlungsroutine eine der untergeordneten Routinen bildet.

In einer bevorzugten Ausgestaltung der Erfindung ist die Programmlaufzeitdauer der Programmteile (B1 ... Bn-1) mit der Laufzeitdauer des die betriebssystem-eigene Unterbrechungs-Behandlungsroutine bildenden Programmteils (Bn) wenigstens annähernd identisch.

Weitere Merkmale, Eigenschaften, Vorteile und mögliche Abwandlungen werden für einen Fachmann anhand der nachstehenden Beschreibung deutlich, in der auf die beigefügte Zeichnungen Bezug genommen ist.

Fig. 1 zeigt ein Flußdiagramm einer Unterbrechunganfrage gemäß der Erfindung.

Fig. 2 zeigt eine Programmstruktur der Unterbrechunganfrage gemäß der Erfindung in größerem Zusammenhang.

Fig. 3 zeigt eine Programmstruktur der Unterbrechunganfrage gemäß der Erfindung in einer abgewandelten Form.

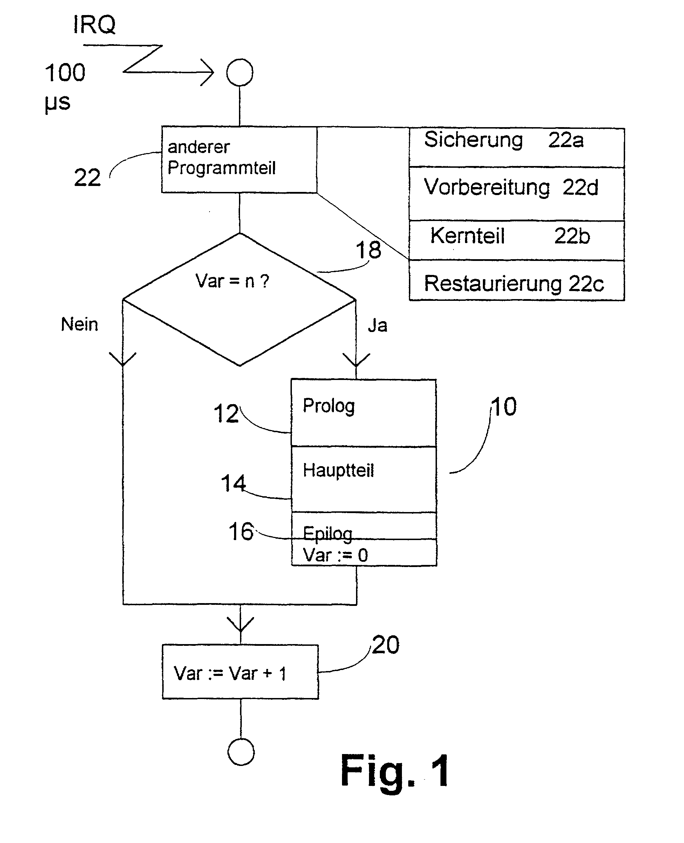

In Fig. 1 ist ein Flußdiagramm einer Unterbrechunganfrage gemäß der Erfindung in einem Computersystem mit einem Prozessor mit Unterbrechungssteuerung und einem Betriebssystem veranschaulicht, bei dem eine Unterbrechungsanfrage (IRQ) (an dem einzigen Unterbrechungseingang) dazu führt, daß der Adresszähler des Prozessors auf eine Unterbrechungs-Behandlungs-routine 10 gestellt wird. Erfindungsgemäß wird jedoch nicht direkt auf die betriebssystem-eigene Unterbrechungs-Behandlungsroutine 10 gesprungen. Vielmehr wird in der (nicht gezeigten) Interrupt-Vektortabelle anstelle der betriebssystem-eigene Unterbrechungs-Behandlungsroutine 10 zunächst auf den Anfang eines anderen Programmteils 22 verwiesen, den der Prozessor zuerst ausführt. Details dieses anderen Programmteils 22 werden weiter unten erläutert.

Anschließend wird in Abhängigkeit vom Ergebnis eines Entscheidungsprozesses 18, in dem das Vorliegen eines bestimmten Entscheidungskriteriums (Var = n?) geprüft wird, entweder die betriebssystem-eigene (oder eine dieser weitgehend entsprechende) Unterbrechungs-Behandlungsroutine 10 abgearbeitet wird und anschließend das Entscheidungskriterium (Var) für spätere Abfragen verändert wird, oder nur das Entscheidungskriterium (Var) für spätere Abfragen verändert wird.

Die Unterbrechungs-Behandlungsroutine 10 hat einen Prolog 12 zum Sichern des Zustandes der Register des Prozessors, einen Hauptteil 14, in dem Vorbereitungsschritte für in dem Computersystem vorhandene Tasks ausgeführt werden, die dazu führen, daß wenigstens eine der Tasks ihren Status ändern kann, wenn die Unterbrechungs-Behandlungsroutine 10 beendet ist. Im Detail werden zum Beispiel Weck-Timer für Tasks (sleep x) inkrementiert., Schließlich hat die Unterbrechungs-Behandlungs-routine 10 einen Epilog 16 zum Wiederherstellen der im Prolog gesicherten Register sowie zum Vorbereiten von Task-Weckoder Task-Wechselroutinen. Außerdem wird das Entscheidungskriterium Var wieder auf Null gesetzt.

Erfindungsgemäß wird die Unterbrechungsanfrage (IRQ) durch einen dem Computersystem zugeordneten Zeitgeber ausgelöst, der eine Periodizität von 100 *µ*sec oder weniger hat.

Der andere Programmteil 22 hat (ebenfalls) eine Sicherungsroutine 22a für den Zustand der Prozessor-Register sowie ggf. weiterer relevanter Daten, einen Kernteil 22b, in dem periodizitäts- und/oder zeitkritische (zum Beispiel Prozess-Steuerungs-)Aufgaben bearbeitet werden, und eine Restaurierungsroutine 22c zum Wiederherstellen der in der Sicherungsroutine gesicherten Register bzw. Daten.

Um die Aufgaben im Kernteil möglichst effizient und einfach programmieren zu können ist im Anschluß an die Sicherungsroutine 22a eine Vorbereitungsroutine 22d vorgesehen, durch die die Ausführung von Hochsprachen-Programmteilen in dem Kernteil 22b des anderen Programmteils 22 eingeleitet wird. Im Detail wird in der Vorbereitungsroutine 22d die Verwendung von lokalen und/oder globalen Variablen, externen Daten(feldern), Konstanten etc. in der Hochsprache in dem Kernteil 22b des anderen Programmteils 22 vorbereitet.

Da Teile des anderen Programmteils 22 (zum Beispiel Teile der Sicherungsroutine 22a oder Teile der Restaurierungsroutine 22c) mit Teilen der Unterbrechungs-Behandlungsroutine (zum Beispiel des Prologes 12 bzw. des Epiloges 16) übereinstimmen, kann der andere Programmteil 22 auch aufgeteilt sein. Das heißt, daß zum Beispiel der Epilog 16 nur teilweise ausgeführt werden muß, wenn die Restaurierungsroutine 22c vor der Inkrementierung 20 des Entscheidungskriteriums Var ausgeführt wird. Der andere Programmteil 22 kann auch als Ganzes vor der Inkrementierung 20 des Entscheidungskriteriums Var ausgeführt werden.

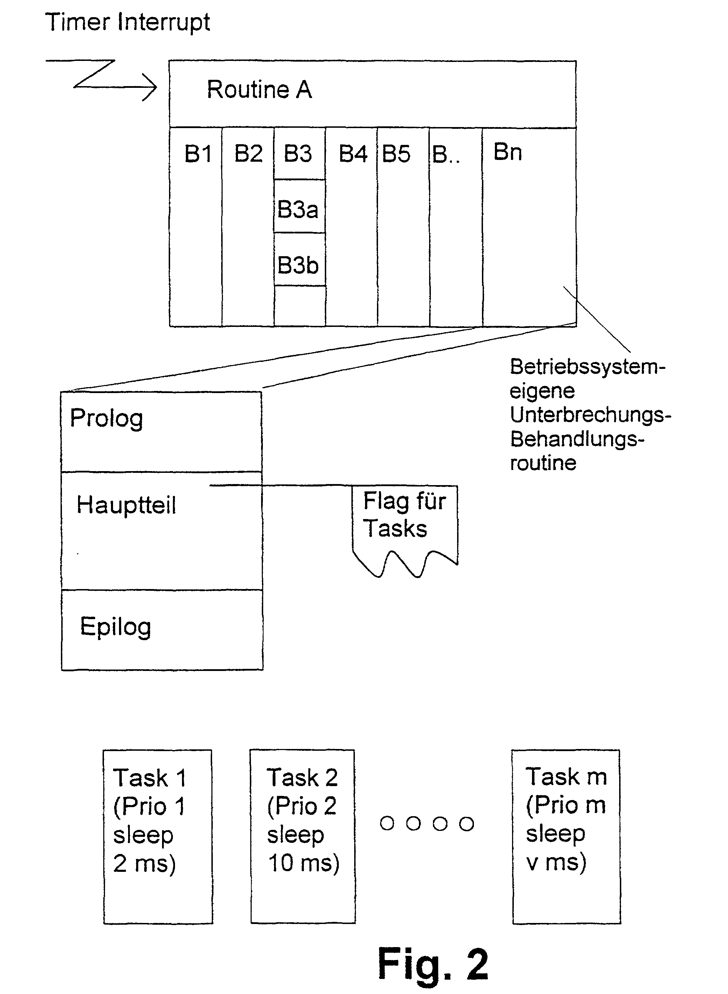

Wie in Fig. 2 gezeigt, kann der Kernteil 22 wenigstens eine übergeordnete Routine (A) mit hoher Periodizität(sanforderung) und mehrere untergeordnete Routinen (B1, B2, ... Bn) mit niedrigerer Periodizität(sanforderung) enthalten.

In diesem Fall wird die übergeordnete Routine (A) bei jedem Aufruf des anderen Programmteils (22) abgearbeitet, während jede der untergeordneten Routinen (B1, B2, ... Bn) in Abhängigkeit von dem Inhalt des Entscheidungskriteriums Var bei dem Entscheidungsprozess 18 abgearbeitet wird.

Dies bedeutet, daß die (betriebssystem-eigene) Unterbrechungs-Behandlungsroutine 10 eine der untergeordneten Routinen (Bn) bildet.

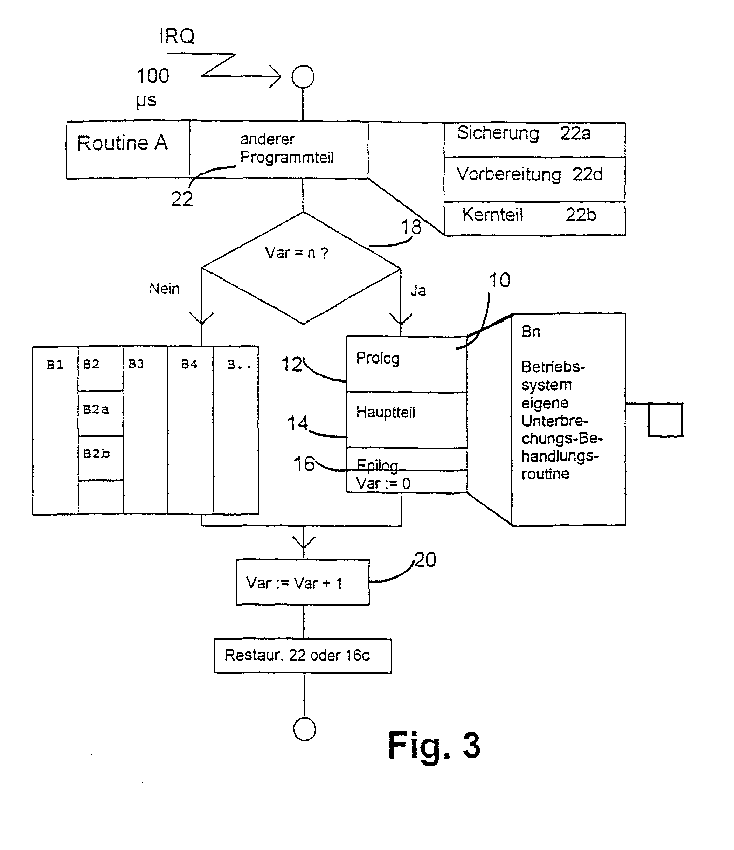

Fig. 3 zeigt, wie sich der Ablauf gemäß Fig. 1 mit der Darstellung gemäß Fig. 2 zusammenfügen läßt. Gleiche Bezugszeichen wie in den Fig. 1 oder 2 bezeichnen in Fig. 3 gleiche oder gleichwirkende Programmteile. Insbesondere erlaubt die Programmstruktur gemäß Fig. 3 eine Abstimmung der Programmlaufzeitdauer der Programmteile B1 ... Bn-1 mit der Laufzeitdauer des Programmteils Bn, welche die betriebssystem-eigene (oder eine dieser weitgehend entsprechende) Unterbrechungs-Behandlungsroutine 10 ist. Damit kann insgesamt die zeitliche Unschärfe der gesamten Unterbrechnungsbehandlung praktisch Null werden, da es dann in zeitlicher Hinsicht gleichgültig ist, ob (nach der Routine A) eine der Routine B1, B2, ... oder die Routine Bn abgearbeitet wird.

## Patentansprüche

1. Unterbrechungsverfahren in einem Computersystem mit einem Prozessor mit Unterbrechungssteuerung und einem Betriebssystem, bei dem
- eine Unterbrechungsanfrage (IRQ) zunächst dazu führt, daß ein Adresszähler des Prozessors auf einen Programmteil (22) gestellt wird, der
-- eine Sicherungsroutine (22a) für den Zustand zumindest eines Teils des Computersystems,
-- einen Kernteil (22b), in dem periodizitäts- und/oder zeitkritische Aufgaben bearbeitet werden, und
-- eine Restaurierungsroutine (22c) zum Wiederherstellen des in der Sicherungsroutine gesicherten Zustandes des Computersystems aufweist, und den der Prozessor ausführt, wonach in einem Entscheidungsprozess in Abhängigkeit von dem Vorliegen eines bestimmten Entscheidungskriteriums (Var) entweder die Unterbrechungs-Behandlungsroutine (10) abgearbeitet wird und das Entscheidungskriterium (Var) für spätere Abfragen verändert wird, oder nur das Entscheidungskriterium (Var) für spätere Abfragen verändert wird, wobei die Unterbrechungs-Behandlungsroutine (10)
-- einen Prolog (12) zum Sichern des Zustandes zumindest eines Teils des Computersystems,
-- einen Hauptteil (14), und
-- einen Epilog (16) zum Wiederherstellen des im Prolog gesicherten Zustandes des Computersystems sowie zum Vorbereiten der Ausführung anderer Aufgaben aufweist.

2. Verfahren nach Anspruch 1, dadurch gekennzeichnet, daß
- die Unterbrechungsanfrage (IRQ) durch einen dem Computersystem zugeordneten Zeitgeber ausgelöst wird, der eine Periodizität von vorzugsweise weniger als 500 *µ*sec, insbesondere von 100 *µ*sec oder weniger aufweist.

3. Verfahren nach Anspruch 1 oder 2, dadurch gekennzeichnet, daß
- der Hauptteil (14) der Unterbrechungs-Behandlungs-routine (10) Vorbereitungsschritte für in dem Computersystem vorhandene Tasks ausführt, die dazu führen, daß wenigstens eine der Tasks ihren Status ändern kann, wenn die Unterbrechungs-Behandlungsroutine (10) beendet ist.

4. Verfahren nach Anspruch 1, dadurch gekennzeichnet, daß der andere Programmteil (22) nach der Sicherungsroutine (22a)
- eine Vorbereitungsroutine (22d) aufweist, durch die die Ausführung von Hochsprachen-Programmteilen in dem Kernteil (22b) des anderen Programmteils (22) eingeleitet wird.

5. Verfahren nach Anspruch 4, dadurch gekennzeichnet, daß
- die Vorbereitungsroutine (22d) die Verwendung von lokalen und/oder globalen Variablen, externen Daten(feldern), Konstanten etc. in dem Kernteil (22b) des anderen Programmteils (22) vorbereitet.

6. Verfahren nach Anspruch 1, dadurch gekennzeichnet, daß
- der Kernteil (22) des Programmteils wenigstens eine übergeordnete Routine (A) mit hoher Priorität und mehrere untergeordnete Routinen (B1, B2, ... Bn) mit niedrigerer Priorität enthält.

7. Verfahren Anspruch 6, dadurch gekennzeichnet, daß
- die übergeordnete Routine (A) bei jedem Aufruf des anderen Programmteils (22) abgearbeitet wird, während jede der untergeordneten Routinen (B1, B2, ... Bn) in Abhängigkeit von einem Entscheidungsprozess (18), vorzugsweise anschließend an die übergeordnete Routine (A) abgearbeitet wird.

8. Verfahren nach Anspruch 6 oder 7, dadurch gekennzeichnet, daß
- die betriebssystem-eigene Unterbrechungs-Behandlungsroutine (10) eine der untergeordneten Routinen (Bn) bildet.

9. Verfahren nach Anspruch 8, dadurch gekennzeichnet, daß
- die Programmlaufzeitdauer der untergeordneten Routinen (B1 ... Bn-1) mit der Laufzeitdauer des die betriebssystem-eigene Unterbrechungs-Behandlungsroutine 10 bildenden Programmteils (Bn) wenigstens annähernd identisch ist.

## Claims

1. An interrupt method in a computer system comprising a processor with interrupt control and an operating system, wherein
- at first an interrupt request (IRQ) causes that an address counter of the processor is set on a program part (22) which comprises
-- a securing routine (22a) for the condition of at least part of the computer system,
-- a kernel (22b) in which periodicity and/or time-critical tasks are processed, and
-- a restoring routine (22c) for restoring the condition of the computer system secured in the securing routine and which the processor performs, whereupon in a decision process depending on the presence of a certain decision criterion (Var), either the interrupt processing routine (10) is executed and the decision criterion (Var) is changed for later inquiries, or the decision criterion (Var) only is changed for later inquiries, wherein the interrupt processing routine (10) comprises
-- a prologue (12) for securing the condition of at least part of the computer system,
-- a main part (14), and
-- an epilogue (16) for restoring the condition of the computer system secured in the prologue and for preparing the execution of other tasks.

2. The method according to Claim 1, characterised in that
- the interrupt request (IRQ) is initiated by a timer associated with the computer system, which has a periodicity of preferably less than 500 µsec, in particular of 100 µsec or less.

3. The method according to Claim 1 or 2, characterised in that
- the main part (14) of the interrupt processing routine (10) carries out preparatory steps for the tasks which are present in the computer system and which result in that at least one of the tasks can change its status when the interrupt processing routine (10) has terminated.

4. The method according to Claim 1, characterised in that the other program part (22) after the securing routine (22a)
- comprises an initialisation routine (22d) by means of which the execution of standard language program portions in the kernel (22b) of the other program part (22) is initiated.

5. The method according to Claim 4, characterised in that
-- the initialisation routine (22d) prepares the use of local and/or global variables, external data (fields), constants, etc. in the kernel (22b) of the other program part (22).

6. The method according to Claim 1, characterised in that
- the kernel (22) of the program part includes at least one higher ranking routine (A) with high priority and several lower ranking routines (B1, B2, ..., Bn) with lower priority.

7. The method according to Claim 6, characterised in that
- the higher ranking routine (A) is executed at each call of the other program part (22), while each of the lower ranking routines (B1, B2, ..., Bn) is executed as a function of a decision process (18), preferably subsequent to the higher ranking routine (A).

8. The method according to Claim 6 or 7, characterised in that
- the operating system-specific interrupt processing routine (10) forms one of the lower ranking routines (Bn).

9. The method according to Claim 8, characterised in that
- the program runtime duration of the lower ranking routines (B1 ... Bn-1) is at least approximately identical with the runtime duration of the program part (Bn) which forms the operating system-specific interrupt processing routine (10).

## Revendications

1. Procédé d'interruption dans un système informatique comprenant un processeur à gestion des interruptions et un système d'exploitation, dans lequel
- une demande d'interruption (IRQ) conduit dans un premier temps à ce qu'un compteur d'adresses du processeur soit réglé pour une partie de programme (22) qui présente
-- une routine de sauvegarde (22a) pour l'état d'au moins une partie du système informatique,
-- une partie principale (22b) dans laquelle des tâches critiques en ce qui concerne le temps et / ou la périodicité sont traitées, et
-- une routine de restauration (22c) pour la restauration de l'état du système informatique sauvegardé dans la routine de sauvegarde
et que le processeur exécute
à la suite de quoi, dans un processus de décision, en fonction de la présence d'un critère de décision (Var) déterminé, soit une routine de traitement d'interruptions (10) est exécutée et le critère de décision (Var) est modifié pour des consultations ultérieures, soit seulement le critère de décision (Var) est modifié pour des consultations ultérieures, la routine de traitement d'interruptions (10) présentant
-- un prologue (12) pour sauvegarder l'état d'au moins une partie du système informatique,
-- une partie principale (14), et
- - un épilogue (16) pour restaurer l'état du système informatique sauvegardé dans le prologue ainsi que pour préparer l'exécution d'autres tâches.

2. Procédé selon la revendication 1, caractérisé en ce que
- la demande d'interruption (IRQ) est déclenchée par une horloge affectée au système informatique qui présente une période de préférence inférieure à 500 µs, en particulier de 100 µs ou moins.

3. Procédé selon la revendication 1 ou 2, caractérisé en ce que
- la partie principale (14) de la routine de traitement d'interruptions (10) exécute des opérations de préparation pour des tâches présentes dans le système informatique qui mènent à ce qu'au moins une des tâches puisse modifier son état lorsque la routine de traitement d'interruptions (10) est terminée.

4. Procédé selon la revendication 1, caractérisé en ce que l'autre partie de programme (22) suivant la routine de sauvegarde (22a) présente
- une routine de préparation (22d) qui initialise l'exécution de parties de programmes en langage évolué dans la partie principale (22b) de l'autre partie de programme (22).

5. Procédé selon la revendication 4, caractérisé en ce que
- la routine de préparation (22d) prépare l'utilisation de variables locales et / ou globales, de (champs de) données externes, de constantes etc. dans la partie principale (22b) de l'autre partie de programme (22).

6. Procédé selon la revendication 1, caractérisé en ce que
- la partie principale (22) de la partie de programme contient au moins une routine supérieure (A) de priorité plus élevée et plusieurs routines subordonnées (B1, B2, ... Bn) de priorité moins élevée.

7. Procédé selon la revendication 6, caractérisé en ce que
- la routine supérieure (A) est exécutée à chaque sollicitation de l'autre partie de programme (22) tandis que chacune des routines subordonnées (B1, B2, ... Bn) est exécutée en fonction d'un processus de décision (18), de préférence à la suite de la routine supérieure (A).

8. Procédé selon la revendication 6 ou 7, caractérisé en ce que
- la routine de traitement d'interruptions propre au système d'exploitation (10) forme une des routines subordonnées (Bn).

9. Procédé selon la revendication 8, caractérisé en ce que
- la durée d'exécution des routines subordonnées (B1 ... Bn-1) est sensiblement identique à la durée d'exécution de la partie de programme (Bn) formant la routine de traitement d'interruptions propre au système d'exploitation (10).
